# EUROPEAN PATENT SPECIFICATION

(11) **EP 4 108 457 B1**
(45) Date of publication and mention of the grant of the patent: **07.01.2026**
(21) Application number: 21757582.8
(22) Date of filing: 16.02.2021
(51) Int. Cl.: B32B 27/36, B65D 65/40, C09J 167/02, B32B 7/027, C08G 63/183, C08G 63/199, C08G 63/20, C08G 63/672

(54) **CRYSTALLINE POLYESTER RESIN AND ADHESIVE COMPOSITION IN WHICH SAME IS USED**
KRISTALLINES POLYESTERHARZ UND KLEBSTOFFZUSAMMENSETZUNG DAMIT
RÉSINE DE POLYESTER CRISTALLIN ET COMPOSITION ADHÉSIVE DANS LAQUELLE CELLE-CI EST UTILISÉE

(30) Priority: 17.02.2020 JP 2020024136
(43) Date of publication of application: 28.12.2022
(73) Proprietor: TOYOBO MC Corporation, Osaka-shi, Osaka 530-0001 (JP)
(72) Inventor: MIKAMI, Tadahiko, Otsu-shi, Shiga 520-0292 (JP); SAKAMOTO, Yasuhiro, Otsu-shi, Shiga 520-0292 (JP)
(74) Representative: Müller-Boré & Partner Patentanwälte PartG mbB
(86) International application number: PCT/JP2021/005631
(87) International publication number: WO 2021/166882

(56) References cited:
- WO-A1-2015/045633
- WO-A1-2018/179689
- JP-A- 2002 371 128
- JP-A- 2007 242 397
- JP-A- 2009 084 349
- JP-A- H06 108 027

## Description

### Technical Field

The present invention relates to a crystalline polyester resin and an aqueous dispersion of polyester resin. More specifically, the present invention relates to an adhesive containing an aqueous dispersion of polyester resin as a main component which is particularly excellent in storage stability, adhesiveness, blocking resistance, and water resistance.

### Background Art

Polyester resins have been widely used as raw materials for resin compositions used for paints, coating agents, adhesives, and the like. A polyester resin is generally constituted from a polycarboxylic acid and a polyhydric alcohol. The selection and the combination of the polycarboxylic acid and the polyhydric alcohol and the magnitude of molecular weights can be freely controlled. The resulting polyester resin has been used in various applications including paint applications and adhesive applications.

In a molecular designing of a polyester resin, selection of a copolymerization component is important. Polycarboxylic acid components and polyhydric alcohol components are roughly classified into aromatic, aliphatic, and alicyclic types. By appropriately selecting these components, the glass transition temperature indicating the flexibility of polyester resin can be controlled. As to a use form, it is common to use an organic solvent-dissolved product or an aqueous dispersion product to be applied to a substrate. Particularly in recent years, an aqueous dispersion has been required due to environmental problems.

In recent years, polyester containers excellent in transparency and recyclability have been widely used as packaging materials for fresh foods such as vegetables and fruits. It is possible to extend the best-before date of fresh food by making the seal complete. Accordingly, it has attracted attention as one candidate of a food distribution revolution. Accordingly, a lid member of a packaging material is required to have hygiene, reliable adhesiveness until the contents are taken out, blocking resistance at the time of winding the film, and water resistance that does not cause fogging due to moisture of the contents.

For example, Patent Document 1 proposes an aqueous dispersion containing a polyester resin (A) having a glass transition temperature of 50°C or higher and a polyester resin (B) having a glass transition temperature of 30°C or lower. Patent Document 2 proposes a crystalline copolymerized polyester resin in which the content of linear aliphatic diol components having 4 to 10 carbon atoms is 75 mol% or more, a melting point is 90°C to 130°C, the content of an aromatic dicarboxylic acid having a sulfonate metal salt contained as a polycarboxylic acid component is in a range of 2 mol% to 5 mol%, and an acid value is less than 4 KOH mg/g.

### Prior Art Documents

### Patent Documents

Patent Document 1: Japanese Patent No. 5241232
Patent Document 2: WO 2015/045633

### Disclosure of the Invention

### Problem that the Invention is to Solve

However, in Patent Document 1, the polyester resin (B) is amorphous, and the peel strength shown in Examples is not in a practical strength level, and there is a problem in achieving both blocking resistance and heat sealability. In Patent Document 2, the polyester resin is crystalline but contains an aromatic dicarboxylic acid having a sulfonate metal salt, and the polyester resin thus has problems in hygiene and water resistance.

As a result of intensive studies to solve the above problems, the present inventors have found that a crystalline polyester free from a sulfonate metal salt is excellent in high adhesiveness, blocking resistance, and water resistance. The present invention has been completed on the basis of such findings.

That is, an object of the present invention is to provide an adhesive composition excellent in storage stability, adhesiveness, blocking resistance, and water resistance.

### Means for Solving the Problem

A crystalline polyester resin containing a polycarboxylic acid component and a polyhydric alcohol component as copolymerization components, wherein 30 to 70 mol% of terephthalic acid and 10 to 60 mol% of 1,4-cyclohexanedicarboxylic acid are contained as the polycarboxylic acid component, and 100 mol% of 1,4-butanediol is contained as the polyhydric alcohol component, wherein the acid value of the crystalline polyester resin is 100 to 600 eq/t, wherein the glass transition temperature of the crystalline polyester resin is -30 to 30°C, and wherein the melting point of the crystalline polyester resin is 70 to 160°C.

Preferably, the content of an aromatic dicarboxylic acid component having a sulfonate group as the polycarboxylic acid component in the crystalline polyester resin is less than 1 mol%.

An aqueous dispersion of polyester resin containing the crystalline polyester resin. An adhesive composition containing the aqueous dispersion of polyester resin. A laminated film formed by laminating the adhesive composition and a thermoplastic resin film. Preferably, the thermoplastic resin film is a polyester-based resin film, and the thickness of a layer of the adhesive composition is in the range of 1 to 10 µm.

A packaging material comprising the laminated film as a constituent component. A lid member for a food packaging container comprising the packaging material as a constituent component. A food packaging container constituted of a laminate of the lid member and a polyester-based resin.

### Advantages of the Invention

The crystalline polyester resin of the present invention can provide an aqueous dispersion excellent in storage stability, adhesiveness, blocking resistance, and water resistance without using a sulfonate metal salt. In particular, the adhesive composition using the aqueous dispersion of the crystalline polyester resin is excellent in adhesiveness to a substrate when made into a lid member of a packaging container and subjected to a heat-sealing. Furthermore, since an FDA-approved raw material is used, the crystalline polyester resin of the present invention is excellent in safety, and it can be suitably used as a packaging material for fresh foods and the like.

### Best Mode for Carrying Out the Invention

As hereunder, an embodiment of the present invention will be explained in detail.

### <Crystalline polyester resin>

The crystalline polyester resin of the present invention has a chemical structure that can be obtained by polycondensation of a polycarboxylic acid and a polyhydric alcohol, wherein the polycarboxylic acid and the polyhydric alcohol each include one or two or more selected components.

The polycarboxylic acid constituting the crystalline polyester resin of the present invention is preferably an aromatic dicarboxylic acid, an alicyclic dicarboxylic acid, and/or an aliphatic dicarboxylic acid.

When the total amount of the polycarboxylic acid component is taken as 100 mol%, the copolymerization amount of terephthalic acid needs to be 30 to 70 mol%. The copolymerization amount of terephthalic acid is preferably 35 to 65 mol% and more preferably 40 to 60 mol%. By setting the copolymerization amount of terephthalic acid to 30 mol% or more, the resulting polyester resin becomes crystalline, and blocking resistance is improved. In addition, by setting the copolymerization amount of terephthalic acid to 70 mol% or less, the melting point does not become too high, and the crystalline polyester resin can be melted with the heat at the time of heat-sealing, whereby adhesiveness is improved.

When the total amount of the polycarboxylic acid component is taken as 100 mol%, the copolymerization amount of 1,4-cyclohexanedicarboxylic acid needs to be 10 to 60 mol%. The copolymerization amount of 1,4-cyclohexanedicarboxylic acid is preferably 15 to 55 mol% and more preferably 20 to 50 mol%. By setting the copolymerization amount of 1,4-cyclohexanedicarboxylic acid to 10 mol% or more, the glass transition temperature of the resulting polyester resin is not excessively high, and the adhesiveness is improved. In addition, by setting the copolymerization amount of 1,4-cyclohexanedicarboxylic acid to 60 mol% or less, crystallinity of the polyester resin is increased, and blocking resistance is improved.

When the total amount of the polycarboxylic acid component is taken as 100 mol%, the total copolymerization amount of terephthalic acid and 1,4-cyclohexanedicarboxylic acid is preferably 40 mol% or more, more preferably 50 mol% or more, further preferably 60 mol% or more, furthermore preferably 70 mol% or more, and particularly preferably 80 mol% or more. Also, the total copolymerization amount of terephthalic acid and 1,4-cyclohexanedicarboxylic acid is preferably 99 mol% or less, more preferably 95 mol% or less, and further preferably 90 mol% or less. Within the above range, adhesiveness and blocking resistance are improved.

When the total amount of the polycarboxylic acid component is taken as 100 mol%, the copolymerization amount of aliphatic dicarboxylic acid is preferably 40 mol% or less, more preferably 35 mol% or less, and further preferably 30 mol% or less. By setting the copolymerization amount of aliphatic dicarboxylic acid to 40 mol% or less, hydrolysis resistance of the crystalline polyester resin is improved, and water resistance is improved. When the aliphatic dicarboxylic acid is copolymerized, the content thereof is preferably 5 mol% or more and more preferably 10 mol% or more.

As to the polycarboxylic acid component other than terephthalic acid and 1,4-cyclohexanedicarboxylic acid, isophthalic acid, orthophthalic acid, 2,6-naphthalenedicarboxylic acid, dimethyl 2,6-naphthalenedicarboxylate, trimellitic acid, adipic acid, sebacic acid, fumaric acid, maleic acid, or a dimer acid is preferably used. These components may be used singly or in combination of two or more kinds thereof. These compounds are approved raw materials described in FDA (Food and Drug Administration) Standard 175.300 (b) (3) (vii) (revised on April 1, 2014) and can be suitably used for food packaging materials. Among them, isophthalic acid, adipic acid, or sebacic acid is preferably combined with terephthalic acid and 1,4-cyclohexanedicarboxylic acid from the viewpoint of adhesiveness to a substrate, water resistance, price, and the like. When the total amount of the polycarboxylic acid component is taken as 100 mol%, the copolymerization amount of these polycarboxylic acid components is preferably 40 mol% or less, more preferably 35 mol% or less, and further preferably 30 mol% or less. By setting the copolymerization amount of these polycarboxylic acid components to 40 mol% or less, hydrolysis resistance of the crystalline polyester resin is improved, and water resistance is improved. The lower limit of the copolymerization amount of these polycarboxylic acid components is not particularly limited, but when these polycarboxylic acid components are copolymerized, the lower limit of the copolymerization amount thereof is preferably 5 mol% or more and more preferably 10 mol% or more.

When the total amount of the polyhydric alcohol component is taken as 100 mol%, the copolymerization amount of 1,4-butanediol needs to be 100 mol%. By setting the copolymerization amount of 1,4-butanediol to 100 mol%, the resulting polyester resin becomes crystalline, and blocking resistance is improved.

It is also preferable to introduce a branched structure by copolymerizing a small amount of a tri- or higher functional polycarboxylic acid component in the crystalline polyester resin of the present invention. This makes it possible to form a more tough layer of an adhesive composition (hereinafter also referred to as an adhesive layer), and the effect of improving water resistance can be exhibited. Specific examples thereof include trimellitic anhydride, ethylene glycol bisanhydrotrimellitate. When the total amount of the total polycarboxylic acid component(s) and total polyhydric alcohol component(s) is taken as 200 mol%, the copolymerization amount of the tri- or higher functional polycarboxylic acid component is preferably 0.5 mol% or more, and more preferably 1 mol% or more. Also, the copolymerization amount of the tri- or higher functional polycarboxylic acid component is preferably 5 mol% or less, more preferably 4 mol% or less, and further preferably 3 mol% or less.

When the total amount of the polycarboxylic acid component is taken as 100 mol%, the content of an aromatic dicarboxylic acid component having a sulfonate group is preferably less than 1 mol%. The content of an aromatic dicarboxylic acid component having a sulfonate group is more preferably 0.5 mol% or less, further preferably 0.1 mol% or less, and particularly preferably 0 mol%. Since the aromatic dicarboxylic acid component having a sulfonate group is an acid component not approved by FDA, the crystalline polyester resin of the present invention can be used for food contact applications by reducing the amount of the aromatic dicarboxylic acid component having a sulfonate group. Examples of the aromatic dicarboxylic acid component having a sulfonate group include 5-sulfoisophthalic acid, 4-sulfonaphthalene-2,7-dicarboxylic acid, 5[4-sulfophenoxy]isophthalic acid, and alkali metal salts thereof. Examples of the alkali metal salt include lithium, sodium, and potassium. Specific examples thereof include sodium 5-sulfonatoisophthalate, potassium 5-sulfonatoisophthalate, sodium 4-sulfonaphthalene-2,7-dicarboxylate, and sodium 5[4-sulfophenoxy]isophthalate.

In addition, in order to impart an acid value, an acid anhydride such as trimellitic anhydride and pyromellitic anhydride may be after-added after polymerization of the polyester resin. In the case of the after-addition, the total amount of the polycarboxylic acid component and the polyhydric alcohol component may exceed 200 mol%. In this case, the total amount of the composition excluding the after-added components such as acid anhydride is taken as 200 mol%, and the calculation is performed based thereon.

In producing the crystalline polyester resin of the present invention, for example, titanium compounds such as tetra-n-butyl titanate, tetraisopropyl titanate, and titanium oxyacetylcetonate; antimony compounds such as antimony trioxide and tributoxyantimony; germanium compounds such as germanium oxide and tetra-n-butoxygermanium; and acetate salts of metals such as magnesium, iron, zinc, manganese, cobalt, and aluminum can be used as a polymerization catalyst. These catalysts may be used singly or in combination of two or more kinds thereof.

The method of the polymerization condensation reaction for producing the crystalline polyester resin of the present invention is not particularly limited, and examples thereof include 1) a method in which a polycarboxylic acid and a polyhydric alcohol are heated in the presence of an arbitrary catalyst, then a dehydration-esterification step is performed, and then a de-polyhydric-alcoholization/polycondensation reaction is performed; and 2) a method in which an alcohol ester product of a polycarboxylic acid and a polyhydric alcohol are heated in the presence of an arbitrary catalyst, then a transesterification reaction is performed, and then a de-polyhydric-alcoholization/polycondensation reaction is performed. In the methods 1) and 2), a part or the whole of the acid component may be substituted with an acid anhydride.

The glass transition temperature (Tg) of the crystalline polyester resin of the present invention is -30 to 30°C, preferably -25 to 25°C, and more preferably -20 to 20°C. By setting the glass transition temperature to the above lower limit or more, occurrence of blocking can be suppressed when a laminated film is wound into a roll. In addition, by setting the glass transition temperature to the above upper limit or less, the resin has flexibility even at the time of peeling at room temperature, and the adhesiveness is improved.

The term "crystallinity" as used in the present invention means that a clear melting peak is observed in the heating process of the polyester resin in which heating is performed from -100°C to 250°C at 20°C/min, using a differential scanning calorimeter (DSC).

The melting point (Tm) of the crystalline polyester resin of the present invention is 70 to 160°C, preferably 75 to 155°C, and more preferably 80 to 150°C. By setting the melting point to the above lower limit or more, the crystallinity is improved, and excellent blocking resistance can be exhibited. In the meantime, by setting the melting point to the above upper limit or less, the resin is sufficiently melted even at a low temperature, and sealing failure does not occur even when heat sealing is performed at a low temperature. Furthermore, even when a plastic film such as a polyester film is used as a substrate to which the crystalline polyester resin of the present invention is applied, problems such as deformation of the substrate do not occur.

The reduced viscosity (ηsp/c) of the crystalline polyester resin is preferably 0.2 to 1.2 dl/g, more preferably 0.4 to 1.1 dl/g and further preferably 0.6 to 1.0 dl/g. By setting the reduced viscosity to the above lower limit or more, the resin cohesive force is improved, and excellent adhesiveness can be exhibited. In the meantime, by setting the reduced viscosity to the above upper limit or less, an aqueous dispersion can be prepared. The reduced viscosity can be arbitrarily adjusted by changing the polymerization time and polymerization temperature of the crystalline polyester resin and the degree of vacuum (in the case of vacuum polymerization) during polymerization. The reduced viscosity is a value measured using an Ubbelohde viscometer at a sample concentration of 0.125 g/25 ml and a measurement temperature of 25°C using chloroform as a measurement solvent.

The acid value of the crystalline polyester resin is 100 to 600 eq/t, preferably 150 to 550 eq/t, and more preferably 200 to 500 eq/t. By setting the acid value to the above upper limit or less, the resin cohesive force is improved because the molecular weight is not low, and excellent adhesiveness can be exhibited. In the meantime, by setting the acid value to the above lower limit or more, an aqueous dispersion can be prepared.

The number average molecular weight (Mn) of the crystalline polyester resin is preferably 4000 to 40000, more preferably 6000 to 35000 and further preferably 8000 to 30000. By setting the number average molecular weight to the above lower limit or more, the resin cohesive force is improved, and excellent adhesiveness can be exhibited. In the meantime, by setting the number average molecular weight to the above upper limit or less, an aqueous dispersion can be prepared. The number average molecular weight can be arbitrarily adjusted by changing the polymerization time and polymerization temperature of the crystalline polyester resin and the degree of vacuum (in the case of vacuum polymerization) during polymerization. The number average molecular weight is a value measured by gel permeation chromatography (hereinafter referred to as GPC, standard substance: polystyrene resin, mobile phase: tetrahydrofuran or chloroform).

### <Aqueous dispersion of polyester resin>

The aqueous dispersion of polyester resin of the present invention contains the crystalline polyester resin and water, and contains an organic solvent depending on necessity.

The boiling point of the organic solvent used for the aqueous dispersion of polyester resin of the present invention is preferably 100°C or higher, more preferably 105°C or higher, further preferably 110°C or higher, particularly preferably 115°C or higher, and the most preferably 120°C or higher. By setting the boiling point to 100°C or higher, the crystalline polyester resin can be melted and easily dispersed in water.

Also, the boiling point is preferably 180°C or lower, more preferably 175°C or lower, further preferably 170°C or lower, particularly preferably 165°C or lower, and the most preferably 160°C or lower. By setting the boiling point to 180°C or lower, there is almost no residual solvent during drying, and problems such as occurrence of blocking during winding do not occur.

The organic solvent used for the aqueous dispersion of polyester resin of the present invention is not particularly limited, and examples thereof include alcohols such as isopropyl alcohol, isobutyl alcohol, and isoamino alcohol; ethylene glycol monomethyl ether, ethylene glycol monoethyl ether, ethylene glycol monoisopropyl ether, ethylene glycol monobutyl ether (hereinafter also referred to as "n-butyl cellosolve" or "n-BuCS"), ethylene glycol mono-tert-butyl ether (hereinafter also referred to as "t-butyl cellosolve" or "t-BuCS"), propylene glycol monobutyl ether, and methyl ethyl ketone. These organic solvents may be used singly or in combination of two or more kinds thereof. Among them, n-butyl cellosolve and t-butyl cellosolve are particularly preferable.

The amount of the organic solvent is preferably 200 parts by mass or less, more preferably 150 parts by mass or less, further preferably 100 parts by mass or less, and particularly preferably 50 parts by mass or less with respect to 100 parts by mass of the crystalline polyester resin. By setting the amount of the organic solvent to the above upper limit or less, residual solvent during drying becomes less, and problems such as occurrence of blocking during winding do not occur. In addition, the storage stability is also improved. The lower limit is not particularly limited, but industrially 1 part by mass or more is acceptable and may be even 10 parts by mass or more.

The amount of the water is preferably 150 parts by mass or more, more preferably 170 parts by mass or more, further preferably 200 parts by mass or more with respect to 100 parts by mass of the crystalline polyester resin. By setting the amount of water to the lower limit or more, the crystalline polyester resin is dispersed in water, and an aqueous dispersion of polyester resin of the present invention can be obtained. Also, the amount of the water is preferably 500 parts by mass or lower, more preferably 450 parts by mass or lower, and further preferably 400 parts by mass or lower. By setting the amount of water to the upper limit or less, the production efficiency is improved, which is industrially advantageous.

The particle size of the crystalline polyester resin phase contained in the aqueous dispersion of polyester resin of the present invention is preferably 30 nm or more, more preferably 40 nm or more, further preferably 50 nm or more, and particularly preferably 60 nm or more. By setting the particle size to the above lower limit or more, film formability is improved, fusion and aggregation of dispersed particles are suppressed, and thickening and dispersion failure do not occur. Also, the particle size is preferably 250 nm or less, more preferably 200 nm or less, and further preferably 150 nm or less. By setting the particle size to the above upper limit or less, excellent dispersion stability and film formability can be maintained, and the appearance and performance of the resulting film are improved. Here, the particle size refers to the particle size of the crystalline polyester resin. When two or more kinds of polyester resins are contained, such as when another polyester resin is contained, the particle size refers to the average particle size of the two or more kinds of polyester resins.

The aqueous dispersion of polyester resin of the present invention can be suitably used as a raw material of a coating agent or a heat sealing agent in addition to an adhesive, and is particularly suitable for adhesive applications.

### <Adhesive composition>

The adhesive composition of the present invention contains the aqueous dispersion of polyester resin as an essential component.

The adhesive composition of the present invention can be used by blending other polyester resins, aqueous dispersions thereof, and various additives as long as the performance of the present invention is not impaired. The additives are not particularly limited, but an anti-blocking agent or the like is preferably used.

Examples of the anti-blocking agent include inorganic particles, organic particles, and waxes. These can be contained to such an amount that does not lower the adhesiveness and the blocking resistance. These anti-blocking agents may be used singly or in combination of two or more kinds thereof. When the anti-blocking agent is contained, the content thereof is preferably 0.1 parts by mass or more and more preferably 0.2 parts by mass or more with respect to 100 parts by mass of the crystalline polyester resin. By setting the content of the anti-blocking agent to the above lower limit value or more, the effect of blocking resistance can be exhibited. Also, the content of the anti-blocking agent is preferably 5 parts by mass or less and more preferably 3 parts by mass or less. By setting the content of the anti-blocking agent to the above upper limit or less, adhesiveness and transparency can be maintained.

Examples of the inorganic particles include inorganic particles containing oxides, hydroxides, sulfates, carbonates, silicates, or the like of metals such as magnesium, calcium, barium, zinc, zirconium, molybdenum, silicon, antimony, and titanium. Among these inorganic particles, silica gel particles are particularly preferable. The shape of the particles may be any shape such as a powder shape, a particulate shape, a granular shape, a flat plate shape, and a needle shape and is not limited.

Examples of the organic particles include particles of a polymer such as a polymethyl methacrylate resin, a polystyrene resin, a nylon resin, a melamine resin, a benzoguanamine resin, a phenol resin, a urea resin, a silicone resin, a methacrylate resin, and an acrylate resin; cellulose powder, nitrocellulose powder, wood powder, waste paper powder, rice husk powder, and starch. The polymer particles can be obtained by a polymerization method such as emulsion polymerization, suspension polymerization, dispersion polymerization, soap-free polymerization, and microsuspension polymerization. The organic particles can be used to such an extent that the effects of the present invention are not impaired. The shape of the particles may be any shape such as a powder shape, a particulate shape, a granular shape, a flat plate shape, and a needle shape and is not limited.

Specific examples of the waxes include hydrocarbon waxes such as liquid paraffin, natural paraffin, microwax, synthetic paraffin, and polyethylene wax; fatty acid waxes such as stearic acid; fatty acid amide waxes such as stearic acid amide, palmitic acid amide, methylene bis(stearamide), ethylene bis(stearamide), oleic acid amide, and esylic acid amide; ester waxes such as lower alcohol esters of fatty acids; polyhydric alcohol esters of fatty acids, and polyglycol esters of fatty acids; alcohol waxes such as cetyl alcohol and stearyl alcohol; natural waxes such as olefinic wax, castor wax, and carnauba wax; and metal soaps derived from fatty acids having 12 to 30 carbon atoms. The waxes can be used to such an extent that the effects of the present invention are not impaired.

### <Laminated film>

The laminated film of the present invention is a film in which an adhesive layer formed of an adhesive composition of the present invention is laminated on at least one surface of a substrate film. Such a laminated film is obtained by applying the adhesive composition to the substrate film and then performing a drying treatment.

The substrate film is not particularly limited as long as an adhesive layer can be formed of the adhesive composition of the present invention, but a thermoplastic resin film is preferable. Examples thereof include a polyester-based resin film, a polypropylene-based resin film, a polyamide-based resin film, a polyvinyl alcohol-based resin film, and a polyvinylidene chloride-based resin film. Among them, a polyester-based resin film is more preferable because it is suitable as a lid member of a food packaging container.

The thickness of the substrate film is preferably 5 µm or more, and more preferably 10 µm or more. By setting the thickness of the substrate film to the above lower limit or more, the durability of the substrate film is improved. Also, the thickness of the substrate film is preferably 50 µm or less, and more preferably 30 µm or less. By setting the thickness of the substrate film to the above upper limit or less, it can be practically used as a lid member of a food packaging container.

The thickness of the adhesive layer is preferably 1 µm or more, and more preferably 2 µm or more. By setting the thickness of the adhesive layer to the above lower limit or more, the adhesiveness is improved. Also, the thickness of the adhesive layer is preferably 10 µm or less, and more preferably 5 µm or less. By setting the thickness of the adhesive layer to the above upper limit or less, adhesiveness and heat sealability are improved.

Since the laminated film of the present invention is excellent in adhesiveness, it is suitable as a constituent component of a packaging material. Among them, it is suitable as a lid member of a food packaging container for fresh food or the like. When used as a lid member of a food packaging container, contents of the container can be sealed by laminating the adhesive layer surface of the laminated film and the food packaging container. The food packaging container is not particularly limited but is preferably made of a polyester-based resin.

### Examples

As hereunder, the present invention will be more specifically illustrated by referring to Examples although the present invention is not limited to those Examples. A term "part(s)" in Examples and Comparative Examples (text) stand(s) for part(s) by mass.

### (Methods for evaluating physical properties)

### Measurement of composition of copolymerized polyester resin

Using a 400-MHz ¹H-nuclear magnetic resonance spectrometer (¹H-NMR), molar proportions of a polycarboxylic acid component and a polyhydric alcohol component constituting the copolymerized polyester were determined. As a solvent, deuterated chloroform was used.

### Crystal melting point (Tm) and glass transition temperature (Tg)

In an aluminum snap-in lid type container, 5 mg of a sample (crystalline polyester resin) was sealed and subjected to a measurement at a temperature rising rate of 20°C/min from -100°C to 250°C, using a differential scanning calorimeter (DSC) DSC-220 manufactured by Seiko Instruments Inc.. The maximum peak temperature of the heat of fusion was determined as the crystal melting point. In addition, under the same conditions using the above measuring apparatus, the glass transition temperature was determined by the temperature at the intersection of the extended line of the baseline equal to or lower than the glass transition temperature and the tangent indicating the maximum inclination between the rising portion of the peak and the apex of the peak.

### Storage stability

An aqueous dispersion of polyester resin was stored (left standing) at 25°C for 6 months. After that, changes in appearance and shape (viscosity) were inspected.

### <Evaluation criteria>

o: No change was observed in the appearance and shape (viscosity).
Δ: Although cloudiness occurred, the shape (viscosity) did not change.
x: An increase in viscosity occurred, or separation occurred, or dispersion failure occurred.

### Preparation of laminated film for evaluation

Each of the adhesive compositions obtained in Examples and Comparative Examples was applied to a corona-treated surface of a polyester film (manufactured by Toyobo Co., Ltd., E5107) having a thickness of 25 µm so that the thickness after drying would be 3 g/m². Then, drying was performed at 160°C for 30 seconds so as to obtain a laminated film for evaluation.

### (1) Peel strength (adhesiveness)

The adhesive layer surface of the laminated film for evaluation was heat-sealed to an unstretched amorphous PET sheet having a thickness of 350 µm at a temperature of 160°C and a pressure of 2.8 kgf/cm² for 1 second. Thereafter, a test piece having a width of 25 mm was cut out and subjected to a 180° peel test at 25°C and a tensile speed of 100 mm/min, and the peel strength was measured.

### <Evaluation criteria>

∘: 800 gf/25 mm or more
Δ: 500 gf/25 mm or more and less than 800 gf/25 mm
×: less than 500 gf/25 mm

### (2) Blocking resistance

The adhesive layer surface of the laminated film for evaluation was superimposed on the corona-untreated surface of the polyester film (manufactured by Toyobo Co., Ltd., E5107) so as to produce a test sample. Thereafter, the sample was stored at 40°C under a pressure of 0.9 kgf/cm² for 1 day. Then, blocking resistance was determined according to the following criteria.

### <Evaluation criteria>

∘: There was no tack in the test sample.
Δ: Although the test sample had a slight tack, it was within a range that does not cause a problem in use.
×: The test sample had a tack, which was within a range that causes problems in use.

### (3) Water resistance

The test piece prepared in the evaluation item of peeling strength was immersed in water at 25°C for 1 day. Thereafter, the test piece was measured according to the method for measuring the peeling strength, and this was used as rating of water resistance.

### <Evaluation criteria>

∘: 800 gf/25 mm or more
Δ: 500 gf/25 mm or more and less than 800 gf/25 mm
×: less than 500 gf/25 mm

### Examples of crystalline polyester resin

### Synthesis of crystalline polyester resin (A-1)

A reaction can equipped with a stirrer, a thermometer, a heater, a cooling device, and a distillation cooler was charged with 375 parts by mass of terephthalic acid, 225 parts by mass of 1,4-cyclohexanedicarboxylic acid, 132 parts by mass of adipic acid, 9 parts by mass of trimellitic anhydride, 813 parts by mass of 1,4-butanediol, and 0.5 part by mass of tetrabutyl titanate. While the temperature was raised to 220°C, the esterification reaction was carried out over 4 hours. After completion of the esterification reaction, the pressure in the system was reduced to 10 torr over 60 minutes while the temperature was raised to 250°C. Then, the pressure was further reduced to a vacuum of 1 torr or less, and a polycondensation reaction was performed at 250°C so as to reach a predetermined viscosity. Thereafter, nitrogen was flowed into the system, the system was cooled to 220°C, 27 parts by mass of trimellitic anhydride was added, and the mixture was allowed to react for 30 minutes. After completion of the reaction, the crystalline polyester resin was taken out and cooled whereby a crystalline polyester resin (A-1) was obtained.

### Synthesis of crystalline polyester resins (A-2) to (A-15)

Polyester resins (A-2) to (A-15) were synthesized in the same manner as in the crystalline polyester resin (A-1) synthesis example. The measurement results of the resin composition and physical properties are shown in Table 1.

**[Table 1]**

| Polyester resin | | | A-1 | A-2 | A-3 | A-4 | A-5 | A-6 | A-7 | A-8 | A-9 |
|---|---|---|---|---|---|---|---|---|---|---|---|
| Composition | polycarboxylic acid component (mol%) | terephthalic acid | 50 | 34 | 65 | 60 | 60 | 42 | 45 | 50 | 50 |
| | | 1,4-cyclohexanedicarboxylic acid | 29 | 45 | 15 | 29 | 29 | 37 | 54 | 29 | 27 |
| | | isophthalic acid | | | | | | 20 | | | |
| | | adipic acid | 20 | 20 | 19 | 10 | | | | 20 | 20 |
| | | sebacic acid | | | | | 10 | | | | |
| | | 5-sulfoisophthalic acid | | | | | | | | | |
| | | trimellitic anhydride | 1 | 1 | 1 | 1 | 1 | 1 | 1 | 1 | 3 |
| | | trimellitic anhydride (acid-addition) | 3 | 3 | 3 | 3 | 3 | 3 | 3 | 2 | 5 |
| | polyhydric alcohol component (mol%) | 1,4-butanediol | 100 | 100 | 100 | 50 | 100 | 100 | 80 | 100 | 100 |
| | | diethylene glycol | | | | 50 | | | 20 | | |
| Physical properties | | ηsp/c (dl/g) | 0.60 | 0.65 | 0.62 | 0.54 | 0.70 | 0.62 | 0.57 | 0.58 | 0.35 |
| | | number average molecular weight Mn | 15000 | 15000 | 16000 | 15500 | 18000 | 15000 | 14200 | 14300 | 8500 |
| | | acid value (eq/t) | 350 | 310 | 360 | 352 | 345 | 350 | 333 | 180 | 450 |
| | | Tg (°C) | -12 | -14 | 1 | 1 | 2 | 12 | 4 | -10 | -15 |
| | | Tm (°C) | 120 | 95 | 158 | 110 | 150 | 104 | 117 | 123 | 116 |

| Polyester resin | | | | A-10 | | A-11 | | A-12 | A-13 | A-14 | A-15 |
|---|---|---|---|---|---|---|---|---|---|---|---|
| Composition | polycarboxylic acid component (mol%) | terephthalic acid | | 75 | | 25 | | 50 | 34 | 50 | 45 |
| | | 1,4-cyclohexanedicarboxylic acid | | 24 | | 65 | | 29 | | 29 | 30 |
| | | isophthalic acid | | | | | | | 20 | | |
| | | adipic acid | | | | 9 | | 20 | 46 | 20 | 20 |
| | | sebacic acid | | | | | | | | | |
| | | 5-sulfoisophthalic acid | | | | | | | | | 5 |
| | | trimellitic anhydride | | 1 | | 1 | | 1 | 0 | 1 | 0 |
| | | trimellitic anhydride (acid-addition) | | 3 | | 3 | | 3 | 3 | 1 | 0 |
| | polyhydric alcohol component (mol%) | 1,4-butanediol | | 100 | | 100 | | 40 | 100 | 100 | 100 |
| | | diethylene glycol | | | | | | 60 | | | |
| Physical properties | | ηsp/c (dl/g) | | 0.60 | | 0.54 | | 0.60 | 0.40 | 0.50 | 0.60 |
| | | number average molecular weight Mn | | 16000 | | 13800 | | 15500 | 12000 | 10000 | 15000 |
| | | acid value (eq/t) | | 330 | | 360 | | 320 | 285 | 80 | 20 |
| | | Tg (°C) | | 27 | | -10 | | -25 | -24 | -16 | -13 |
| | | Tm (°C) | | 178 | | no peak | | no peak | 83 | 120 | 115 |

### Example 1

### Preparation example of aqueous dispersion of polyester resin (B)

### Preparation of aqueous dispersion of polyester resin (B-1)

The crystalline polyester resin (A-1) was dispersed in water according to the following procedure. A reaction vessel equipped with a stirrer, a condenser, and a thermometer was charged with 100 parts of the crystalline polyester resin (A-1), 40 parts of ethylene glycol monobutyl ether, 120 parts of methyl ethyl ketone, and 30 parts of isopropyl alcohol, and the resin was dissolved at 80°C over 3 hours. Subsequently, 3.6 parts of dimethylaminoethanol was added thereto, and the resulting mixture was stirred for 30 minutes. Then, 260 parts of warm water was added, and the mixture was stirred for 1 hour. Thereafter, methyl ethyl ketone and isopropyl alcohol were distilled off while raising the internal temperature to 100°C, thereby obtaining an aqueous dispersion of polyester resin (B-1). The results of various characteristic evaluations are shown in Table 2.

### Examples 2 to 9 and Comparative Examples 1 to 6

Aqueous dispersions of polyester resins (B-2) to (B-15) were obtained in the same manner as in the preparation example of Example 1. The results of various characteristic evaluations are shown in Table 2. Examples 4 and 7 are not according to the invention.

**[Table 2]**

| | | Example 1 | Example 2 | Example 3 | Example 4 | Example 5 | Example 6 | Example 7 | Example 8 | Example 9 |
|---|---|---|---|---|---|---|---|---|---|---|
| Aqueous dispersion of polyester resin | | B-1 | B-2 | B-3 | B-4 | B-5 | B-6 | B-7 | B-8 | B-9 |
| | polyester resin (parts by mass) | A-1 | A-2 | A-3 | A-4 | A-5 | A-6 | A-7 | A-8 | A-9 |
| | | 100 | 100 | 100 | 100 | 100 | 100 | 100 | 100 | 100 |
| | water | 260 | 260 | 260 | 260 | 260 | 260 | 260 | 260 | 260 |
| | ethylene glycol monobutyl ether | 40 | 40 | 40 | 40 | 40 | 40 | 40 | 40 | 40 |
| Storage stability | evaluation | Δ cloudiness | ○ | Δ cloudiness | ○ | Δ cloudiness | ○ | ○ | Δ cloudiness | Δ cloudiness |
| Peel strength | peel strength [gf/25mm] | 810 | 900 | 550 | 960 | 600 | 680 | 830 | 760 | 550 |
| | evaluation | ○ | o | Δ | ○ | Δ | Δ | ○ | Δ | Δ |
| Blocking resistance | evaluation | ○ | Δ | ○ | Δ | ○ | Δ | Δ | ○ | ○ |
| Water resistance | peel strength [gf/25mm] | 700 | 650 | 520 | 840 | 580 | 600 | 810 | 700 | 510 |
| | evaluation | Δ | Δ | Δ | ○ | Δ | Δ | ○ | Δ | Δ |

| | | Comparative Example 1 | | Comparative Example 2 | | Comparative Example 3 | | Comparative Example 4 | Comparative Example 5 | Comparative Example 6 |
|---|---|---|---|---|---|---|---|---|---|---|
| | | B-10 | | B-11 | | B-12 | | B-13 | B-14 | B-15 |
| Aqueous dispersion of polyester resin | polyester resin (parts by mass) | A-10 | | A-11 | | A-12 | | A-13 | A-14 | A-15 |
| | | 100 | | 100 | | 100 | | 100 | 100 | 100 |
| | water | 260 | | 260 | | 260 | | 260 | 260 | 260 |
| | ethylene glycol monobutyl ether | 40 | | 40 | | 40 | | 40 | 40 | 40 |
| Storage stability | evaluation | × thickening | | ○ | | ○ | | × separation | × dispersion failure | ○ |
| Peel strength | peel strength [gf/25mm] | 100 | | 870 | | 920 | | 750 | * | 900 |
| | evaluation | × | | ○ | | ○ | | Δ | * | o |
| Blocking resistance | evaluation | ○ | | × | | × | | Δ | * | ○ |
| Water resistance | peel strength [gf/25mm] | 100 | | 520 | | 380 | | 410 | * | 200 |
| | evaluation | × | | Δ | | × | | × | * | × |

| | | | | | | | | | | |
|---|---|---|---|---|---|---|---|---|---|---|
| ^{*} In Comparative Example 5, an aqueous dispersion could not be obtained due to dispersion failure. Therefore, characteristics could not be measured. | | | | | | | | | | |

As is apparent from Table 2, in Examples 1 to 9, the storage stability, the adhesiveness, the blocking resistance, and the water resistance are well balanced and good. On the other hand, in Comparative Example 1, the melting point of the polyester resin is high, and the storage stability of the aqueous dispersion is poor. Furthermore, peeling strength is low, and water resistance is poor. In Comparative Examples 2 and 3, the polyester resin has low crystallinity, does not have any melting point, and is therefore poor in blocking resistance and water resistance. In Comparative Example 4, hydrolysis of the polyester resin easily proceeds, and the aqueous dispersion has poor storage stability and water resistance. In Comparative Example 5, an aqueous dispersion could not be obtained due to the low acid value of the polyester resin and dispersion failure. Therefore, characteristics such as peel strength could not be measured. In Comparative Example 6, an aqueous dispersion could be prepared, but water resistance was poor due to the use of 5-sulfoisophthalic acid.

### Industrial Applicability

The adhesive composition of the present invention and the laminated film using the same are excellent in adhesiveness to a substrate and also have blocking resistance when heat-sealed as a lid member for a packaging container.

## Claims

1. A crystalline polyester resin containing a polycarboxylic acid component and a polyhydric alcohol component as copolymerization components, wherein 30 to 70 mol% of terephthalic acid and 10 to 60 mol% of 1,4-cyclohexanedicarboxylic acid are contained as the polycarboxylic acid component, and 100 mol% of 1,4-butanediol is contained as the polyhydric alcohol component, wherein the acid value of the crystalline polyester resin is 100 to 600 eq/t, wherein the glass transition temperature of the crystalline polyester resin is -30 to 30°C, as measured in accordance with the method specified in the description, and wherein the melting point of the crystalline polyester resin is 70 to 160°C, as measured in accordance with the method specified in the description.

2. The crystalline polyester resin according to claim 1, wherein the content of an aromatic dicarboxylic acid component having a sulfonate group as the polycarboxylic acid component is less than 1 mol%.

3. An aqueous dispersion of polyester resin containing the crystalline polyester resin according to claim 1 or 2.

4. An adhesive composition containing the aqueous dispersion of polyester resin according to claim 3.

5. A laminated film formed by laminating the adhesive composition according to claim 4 and a thermoplastic resin film.

6. The laminated film according to claim 5, wherein the thermoplastic resin film is a polyester-based resin film.

7. The laminated film according to claim 5 or 6, wherein the thickness of a layer of the adhesive composition is in the range of 1 to 10 µm.

8. A packaging material comprising the laminated film according to any of claims 5 to 7 as a constituent component.

9. A lid member for a food packaging container comprising the packaging material according to claim 8 as a constituent component.

10. A food packaging container constituted of a laminate of the lid member according to claim 9 and a polyester-based resin.

## Patentansprüche

1. Kristallines Polyesterharz, enthaltend eine Polycarbonsäurekomponente und eine mehrwertige Alkoholkomponente als Copolymerisationskomponenten, wobei 30 bis 70 mol% Terephthalsäure und 10 bis 60 mol% 1,4-Cyclohexandicarbonsäure als die Polycarbonsäurekomponente enthalten sind und 100 mol% 1,4-Butandiol als die mehrwertige Alkoholkomponente enthalten ist, wobei der Säurewert des kristallinen Polyesterharzes 100 bis 600 eq/t beträgt, wobei die Glasübergangstemperatur des kristallinen Polyesterharzes -30 bis 30°C, gemessen in Übereinstimmung mit dem in der Beschreibung angegebenen Verfahren, beträgt, und wobei der Schmelzpunkt des kristallinen Polyesterharzes 70 bis 160°C, gemessen in Übereinstimmung mit dem in der Beschreibung angegebenen Verfahren, beträgt.

2. Kristallines Polyesterharz nach Anspruch 1, wobei der Gehalt einer aromatischen Dicarbonsäurekomponente mit einer Sulfonatgruppe als die Polycarbonsäurekomponente weniger als 1 mol% beträgt.

3. Wässrige Polyesterharzdispersion, enthaltend das kristalline Polyesterharz nach Anspruch 1 oder 2.

4. Haftmittelzusammensetzung, enthaltend die wässrige Polyesterharzdispersion nach Anspruch 3.

5. Laminierte Folie, gebildet durch Laminieren der Haftmittelzusammensetzung nach Anspruch 4 und einer thermoplastischen Harzfolie.

6. Laminierte Folie nach Anspruch 5, wobei die thermoplastische Harzfolie eine Harzfolie auf Polyesterbasis ist.

7. Laminierte Folie nach Anspruch 5 oder 6, wobei die Dicke einer Schicht der Haftmittelzusammensetzung im Bereich von 1 bis 10 µm liegt.

8. Verpackungsmaterial, umfassend die laminierte Folie nach einem der Ansprüche 5 bis 7 als Bestandteil.

9. Deckelelement für einen Lebensmittelverpackungsbehälter, umfassend das Verpackungsmaterial nach Anspruch 8 als Bestandteil.

10. Lebensmittelverpackungsbehälter, bestehend aus einem Laminat aus dem Deckelelement nach Anspruch 9 und einem Harz auf Polyesterbasis.

## Revendications

1. Résine polyester cristalline contenant un composant d'acide polycarboxylique et un composant d'alcool polyhydrique en tant que composants de copolymérisation, dans laquelle 30 à 70 % en moles d'acide téréphtalique et 10 à 60 % en moles d'acide 1,4-cyclohexanedicarboxylique sont contenus en tant que composant d'acide polycarboxylique, et 100 % en moles de 1,4-butanediol est contenu en tant que composant d'alcool polyhydrique, dans laquelle l'indice d'acidité de la résine polyester cristalline est de 100 à 600 éq/t, dans laquelle la température de transition vitreuse de la résine polyester cristalline est de - 30 à 30 °C, telle que mesurée selon la méthode spécifiée dans la description, et dans laquelle le point de fusion de la résine polyester cristalline est de 70 à 160 °C, tel que mesuré selon la méthode spécifiée dans la description.

2. Résine polyester cristalline selon la revendication 1, dans laquelle la teneur en composant d'acide dicarboxylique aromatique ayant un groupe sulfonate en tant que composant d'acide polycarboxylique est inférieure à 1 % en moles.

3. Dispersion aqueuse de résine polyester contenant la résine polyester cristalline selon la revendication 1 ou 2.

4. Composition adhésive contenant la dispersion aqueuse de résine polyester selon la revendication 3.

5. Film stratifié formé par stratification de la composition adhésive selon la revendication 4 et d'un film de résine thermoplastique.

6. Film stratifié selon la revendication 5, dans lequel le film de résine thermoplastique est un film de résine à base de polyester.

7. Film stratifié selon la revendication 5 ou 6, dans lequel l'épaisseur d'une couche de la composition adhésive est comprise dans la plage de 1 à 10 µm.

8. Matériau de conditionnement comprenant le film laminé selon l'une quelconque des revendications 5 à 7 en tant que composant constitutif.

9. Élément couvercle pour un récipient de conditionnement alimentaire comprenant le matériau de conditionnement selon la revendication 8 en tant que composant constitutif.

10. Récipient de conditionnement alimentaire constitué d'un stratifié de l'élément couvercle selon la revendication 9 et d'une résine à base de polyester.
